# EUROPÄISCHE PATENTANMELDUNG

(11) **EP 3 614 321 A1**
(43) Veröffentlichungstag der Anmeldung: **26.02.2020**
(21) Anmeldenummer: 18189790.1
(22) Anmeldetag: 20.08.2018
(51) Int. Cl.: G06Q 10/08

(54) **VERFAHREN, MOBILES MELDEGERÄT UND SYSTEM ZUM ÜBERWACHEN EINES MIT EINEM RFID-TRANSPONDER AUSGESTATTETEN OBJEKTS**

(71) Anmelder: Umdasch Group NewCon GmbH, 3300 Amstetten (AT)
(72) Erfinder: BRANDL, Martin, 3300 Amstetten (AT)
(74) Vertreter: Sonn & Partner Patentanwälte

(57) **Zusammenfassung**

Verfahren zum Überwachen eines mit einem RFID-Transponder (26) ausgestatteten Objekts (22), wobei das Verfahren umfasst:
-Anbringen eines mobilen Meldegeräts (1) an dem Objekt (22) in Reichweite des RFID-Transponders (26);
-Auslesen des RFID-Transponders (26) mit dem mobilen Meldegerät (1) ;
-Übertragen mehrerer Aktualisierungsnachrichten (36) in zeitlichen Abständen von dem mobilen Meldegerät (1) an eine Basisstation (29), wobei jede Nachricht (36) eine dem RFID-Transponder (26) eindeutig zugeordnete Identifikation (35) enthält.

## Beschreibung

Die Erfindung betrifft ein Verfahren zum Überwachen eines mit einem RFID-Transponder ausgestatteten Objekts.

Des Weiteren betrifft die Erfindung ein mobiles Meldegerät sowie ein System zum Überwachen eines mit einem RFID-Transponder ausgestatteten Objekts.

Die vorliegende Offenbarung bezieht sich vorzugsweise auf die Überwachung von Objekten auf einer Baustelle. Auf Baustellen werden Objekte wie Schalungselemente oder Container üblicherweise zu Beginn des entsprechenden Bauabschnitts angeliefert, wo sie anschließend bis zu ihrem Gebrauch zwischengelagert werden. Nach ihrem Einsatz werden die Objekte wieder zurück in ein Lager gebracht oder erneut auf der Baustelle zwischengelagert, bis sie von dort zur nächsten Baustelle transportiert werden. Bauunternehmen haben dabei oftmals keinen Überblick darüber, wo sich die Objekte zur Zeit befinden, und ob diese an der jeweiligen Baustelle noch benötigt werden oder bereits an einem anderen Ort eingesetzt werden könnten. Werden mehrere Baustellen von einem Bauunternehmen gleichzeitig betrieben, müssen daher die Schalungselemente, Container und andere für die Errichtung von Bauwerken benötigte Vorrichtungen, wie Trag- und Stützelemente, entsprechend in mehrfacher Ausführung bereitgestellt werden.

Einen wesentlichen Punkt, bei dem auf Baustellen sehr viel Zeit und Kosten eingespart werden kann, stellt daher der Transport und die Lagerung von Objekten dar. Wünschenswert für die bessere Planbarkeit wäre daher zum einen stets Kenntnis davon zu haben, wann welche Objekte wohin geliefert wurden und ob sich bestimmte Objekte bereits an ihrem Bestimmungsort befinden, d.h. eine Anwesenheitskontrolle durchzuführen. Zum anderen wäre es hilfreich, wenn festgestellt werden könnte, ob die Objekte noch im Einsatz sind oder bereits einer neuen Verwendung zugeführt werden können. Das alles fällt unter den Begriff "Überwachung", wobei bei einer Überwachung auch nur Teilaspekte, beispielsweise die Anwesenheitskontrolle, erfüllt sein können.

Mit den Daten aus der Überwachung könnte die Planung und damit einhergehend die Effizienz von Baustellen verbessert werden. Unter anderem könnte der Zeitplan derart gestrafft werden, dass Schalungselemente erst kurz vor dem Gießen des Betons angeliefert und sofort nach dem Erstarren des Betons wieder entfernt und auf die nächste Baustelle gebracht werden. Dadurch könnte nicht nur die Anzahl der in Umlauf befindlichen Schalungselemente reduziert werden, weil die Abfolgen von Ein- und Ausschalung besser aufeinander abgestimmt werden können, sondern es können auch alle nachfolgenden Arbeitsschritte in knapperen Intervallen geplant werden. Wenn dazu noch defekte Objekte oder Gegenstände lokalisiert werden könnten, könnte die Planbarkeit noch weiter verbessert werden.

Aus dem Stand der Technik sind bereits Technologien zur Identifikation von Objekten in Warenströmen bekannt.

Beispielsweise offenbart die US 2011/0095087 A1 ein RFID Lesesystem, das in die Gabel eines Gabelstaplers integriert werden kann. Während des Transports können Objekte demnach identifiziert und somit eine Zeit lang verfolgt werden.

Die US 20110095087 A1 ermöglicht jedoch nur die kurzzeitige Identifikation und die Verfolgung von Objekten über kleine Funk-Distanzen. Sobald die Objekte nach dem Abstellen erneut verschoben werden, ist deren zuvor bestimmte Position nicht mehr gültig. Eine dauerhafte Überwachung ist somit nicht möglich. Des Weiteren müssen die Objekte sich in unmittelbarer Nähe der Gabel des Gabelstaplers befinden.

Daneben ist es aus der DE 10 2010 038 474 A1 bekannt, RFID-Tags an oder in einer Schalungshaut von Schalungsplatten anzubringen und mit einem Handlesegerät oder bei Überschreitung eines elektronischen Schranken bestehend aus Antennen zu identifizieren und auch zu zählen.

Wie bei der US2011/0095087 A1 ist auch bei der DE 10 2010 038 474 A1 nur eine kurzzeitige und lokal stark beschränkte Identifikation mit kurzer Funkdistanz möglich. Sobald die Schalungsplatten identifiziert wurden, verliert sich bei einem anschließenden Transport deren Position wieder. Somit ist auch bei der DE 10 2010 038 474 A1 eine dauerhafte Überwachung nicht möglich.

Aufgabe der vorliegenden Erfindung ist es daher ein Verfahren, ein mobiles Meldegerät und ein System zum Überwachen eines mit einem RFID-Transponder ausgestatteten Objekts zu schaffen, mit denen zumindest einzelne Nachteile des Standes der Technik zumindest gelindert oder zur Gänze beseitigt werden. Insbesondere setzt sich die vorliegende Erfindung zum Ziel, eine dauerhafte Überwachung eines eindeutig identifizierten Objekts über weite Distanzen zu gewährleisten.

Gelöst wird diese Aufgabe zunächst durch ein Verfahren der eingangs erwähnten Art, wobei das Verfahren umfasst:
- Anbringen eines mobilen Meldegeräts an dem Objekt in Reichweite des RFID-Transponders;
- Auslesen des RFID-Transponders mit dem mobilen Meldegerät;
- Übertragen mehrerer Aktualisierungsnachrichten in zeitlichen Abständen von dem mobilen Meldegerät an eine Basisstation, wobei jede Nachricht eine dem RFID-Transponder eindeutig zugeordnete Identifikation enthält.

Vorteilhafterweise ermöglicht die Übertragung mehrerer Aktualisierungsnachrichten in zeitlichen Abständen mit den darin enthaltenen Identifikationen gleichzeitig sowohl die Identifizierung und als auch die Lokalisierung eines Objekts. Werden beispielsweise mehrere Basisstationen mit vorzugsweise getrennten Empfangsbereichen verwendet, zum Beispiel eine Basisstation je Lager und Baustelle, kann durch Empfangen der Aktualisierungsnachrichten durch die jeweilige Basisstation festgestellt werden, wo sich ein Objekt zur Zeit befindet.

Erfindungsgemäß wird das mobile Meldegerät vorübergehend (d.h. reversibel lösbar) an dem zu überwachenden Objekt angebracht, wobei die auf dem RFID-Transponder gespeicherten Daten von dem mobilen Meldegerät ausgelesen werden. Diese Daten dienen in weiterer Folge als Grundlage für die dem jeweiligen RFID-Transponder und damit dem jeweiligen eindeutig zuordenbare Identifikation, welche in den Aktualisierungsnachrichten an die vom Meldegrät entfernte Basisstation enthalten ist. Die Daten des RFID-Transponders dienen somit der Identifizierung des Objekts, welches beispielsweise eine eindeutige Artikelnummer aufweisen kann. Durch die mobile Ausgestaltung des Meldegeräts, insbesondere als von einer Person zu tragenden Handgerät, müssen vorteilhafterweise nicht alle Objekte mit teuren Tracking-Einrichtungen, die zudem keine Identifikation ermöglichen, ausgestattet werden, sondern es genügt, je nach Bedarfsfall, relevante Objekte mit dem mobilen Meldegerät auszustatten und diese damit über eine größere Reichweite zu überwachen. Soll anschließend ein weiteres Objekt überwacht werden, kann das mobile Meldegerät vom ersten Objekt entfernt und an dem weiteren Objekt angebracht werden. Der RFID-Transponder verbleibt aber bevorzugt an den Objekten. Durch das Auslesen des RFID-Transponders und das Versenden der Aktualisierungsnachrichten kann stets automatisch, d.h. ohne weiteres Zutun, festgestellt werden, welches Objekt gerade überwacht wird und wo es sich befindet. Hierfür ist es lediglich erforderlich, dass sich das Meldegerät im Empfangsbereich der jeweiligen Basisstation befindet.

Das Auslesen wird vorzugsweise durch ein am Meldegerät angebrachtes Bedienelement, beispielsweise einen Knopf, ausgelöst. Es ist aber auch denkbar, dass das Auslesen automatisch, d.h. ohne Zutun des Bedieners, ausgelöst wird. Zu diesem Zweck kann das mobile Meldegerät einen Näherungssensor oder einen Taster aufweisen, welcher jeweils ein Signal zum Auslesen abgibt, sobald das Meldegerät in der vorgegebenen Montageposition an dem Objekt angebracht worden ist. Um Energie zu sparen, wird der RFID-Transponder bevorzugt nicht vor der Aktualisierungsnachricht ausgelesen, sondern es werden nach jedem Auslesen des RFID-Transponders zumindest zwei, vorzugsweise eine Vielzahl von Aktualisierungsnachrichten an die Basisstation in zeitlichen Abständen zueinander übertragen. Es ist aber möglich, dass das Auslesen durch das Bedienelement, den Taster oder den Näherungssensor vorzeitig erzwungen wird. Zwar ist es beim Auslesen denkbar, dass Daten bidirektional ausgetauscht werden, vorzugsweise werden Daten jedoch lediglich unidirektional vom RFID-Transponder an das mobile Meldegerät übertragen, um Energie zu sparen.

Unter RFID ("Radio-Frequency Identification") ist die bekannte Nahfeldkommunikationstechnologie zu verstehen, worunter insbesondere auch die NFC-Technologie ("Near Field Communication") fällt. Der RFID-Transponder kann insbesondere als passiver RFID-Transponder ohne eigene Energieversorgung ausgeführt sein, der die Energie zur Kommunikation aus dem elektromagnetischen Feld des mobilen Meldegeräts während des Auslesens bezieht. Der RFID-Transponder kann insbesondere einen Mikrochip und zumindest eine Antenne aufweisen. Vorzugsweise ist der RFID-Transponder ein passiver NFC-Chip. Um mehrere RFID-Technologien in einem RFID-Transponder zu vereinen, können mehrere Antennen für jeweils unterschiede Frequenzbereiche, beispielsweise HF (ca. 3 bis 30 MHz) und UHF (0,3 bis 3 GHz), auf dem RFID-Transponder vorgesehen sein. Auf dem RFID-Transponder sind, wie eingangs bereits erwähnt, Daten gespeichert, welche durch das mobile Meldegerät ausgelesen werden können. "Auslesen" bedeutet in diesem Zusammenhang den Aufbau des Kommunikationskanals, das etwaige Versorgen des RFID-Transponders mit Energie, das Übertragen der Daten vom RFID-Transponder an das Meldegerät (und bei bidirektionaler Übertragung auch zurück) und den Abbauen des Kommunikationskanals. Aus Gründen der Energieeffizienz wird das Auslesen bevorzugt nach einer begrenzten Zeitdauer von unter 1 Minute, besonders bevorzugt von im Wesentlichen 30 Sekunden, beendet. Die ausgelesenen Daten werden zumindest vorübergehend in einem Speicher des Meldegeräts gespeichert und fallweise auch durch eine Verarbeitungseinheit des Meldegeräts verarbeitet. Die im RFID-Transponder gespeicherten Daten können Herstellerangaben, Seriennummern, Artikelnummern, Klassennummern oder ähnliches darstellen, welche die Basis für die in den Aktualisierungsnachrichten enthaltenen Identifikationen bilden. Vorzugsweise stellen die Daten des RFID-Transponders selbst die eindeutig zugeordnete Identifikation dar, welche daher vom mobilen Meldegerät zunächst ausgelesen und anschließend an die Basisstation in mehreren Aktualisierungsnachrichten in zeitlichen Abständen übertragen werden. Bei dieser Ausführungsform ist die Identifikation auf dem RFID-Transponder selbst gespeichert, wird ausgelesen, auf dem Meldegerät gespeichert und in zeitlichen Abständen an die Basisstation übertragen. Alternativ können die Daten des RFID-Transponders durch das Meldegerät aber zu Identifikationen weiterverarbeitet werden. Die Identifikationen können dabei statisch oder dynamisch sein. Eine weitere Alternative stellt die Übertragung einer Meldegerät-ID und die Verknüpfung der Meldegerät-ID mit den Daten des RFID-Transponders dar. In diesem Fall stellt auch die Meldegerät-ID eine Identifikation dar, da durch die Verknüpfung die Meldegerät-ID eindeutig dem RFID-Transponder zuordenbar ist. Es würde daher auch genügen, nur die Meldegeräte-ID in den Aktualisierungsnachrichten zu übertragen. Die zeitlichen Abstände, in denen die Aktualisierungsnachrichten übertragen werden, können dabei regelmäßig oder unregelmäßig sein.

Es kann auch der Fall eintreten, dass momentan keine Basisstation in der Nähe ist und das Meldegerät trotzdem Aktualisierungsnachrichten aussendet. Sobald das Meldegerät wieder in den Empfangsbereich der Basisstation eintritt, empfängt diese die Aktualisierungsnachrichten, wodurch die Position des Meldegeräts und damit des Objekts bestimmt werden kann. Die Basisstation kann mit einem zentralen Server verbunden sein.

Der RFID-Transponder ist durch eine geeignete Verbindung, insbesondere eine Klebe-, Niet- oder eine Schraubverbindung, an dem Objekt angebracht. Alternativ kann der RFID-Transponder auch in das Objekt, vorzugsweise benachbart zu einer Oberfläche, integriert sein. Der RFID-Transponder ist dadurch an dem Objekt fixiert, so dass das Objekt durch die Daten des RFID-Chips eindeutig identifiziert ist. Das Meldegerät ist im Gegensatz zum RFID-Transponder mobil ausgeführt. Zu diesem Zweck ist eine reversibel lösbare Verbindung, insbesondere mit Magneten, Klammern oder Schrauben, vorgesehen, welche eine vorübergehende Anbringung an dem Objekt ermöglicht. In der vorgegebenen Montageposition ist das mobile Meldegerät in Reichweite des RFID-Transponders angeordnet, so dass eine Kommunikation zwischen dem Meldegerät und dem RFID-Transponder gestartet werden kann, um so ein Auslesen des RFID-Transponders zu ermöglichen. Die lösbare Verbindung zwischen dem mobilen Meldegerät und dem Objekt ist bevorzugt so gestaltet, dass das mobile Meldegerät im montierten Zustand am Objekt fixiert, d.h. unbeweglich angeordnet, ist.

Die Übertragung der Aktualisierungsnachrichten erfolgt insbesondere durch Funk, vorzugsweise durch ein Funknetz, besonders bevorzugt durch ein LPWAN ("Low Power Wide Area Network"), wie beispielsweise LoRaWAN ("Long Range Wide Area Network"). D.h. der das Meldegerät und die Basisstation sind besonders bevorzugt Teilnehmer an dem LPWAN.

In den Aktualisierungsnachrichten können neben den Identifikationen auch andere Daten enthalten sein. Beispielsweise kann das Meldegerät, wie oben bereits erwähnt, eine eindeutige Meldegerät-ID besitzen, welche in jeder oder in einzelnen Aktualisierungsnachrichten mitgesendet wird. So kann festgestellt werden, welcher RFID-Transponder durch welches Meldegerät ausgelesen wurde. Ein derartiger Zusammenhang wird als Verknüpfung bezeichnet, welche vorzugsweise so lange aufrecht bleibt, bis das Meldegerät einen weiteren RFID-Transponder ausliest. Die Verknüpfung kann in der Basisstation oder in einem mit der Basisstation verbundenen Server hinterlegt werden. Wenn eine solche Verknüpfung hinterlegt wurde, bildet auch die Meldegerät-ID eine dem RFID-Transponder eindeutig zugeordnete Identifikation, da durch die Verknüpfung bekannt ist, welcher RFID-Transponder von welchem Meldegerät ausgelesen wurde. Wichtig ist nur, dass mit den Identifikation einem bestimmten RFID-Transponder zugeordnet werden kann. Die Zuordnung kann unmittelbar, aber auch mittelbar über eine Verknüpfung mit anderen Daten erfolgen. Beispielsweise kann in der ersten Aktualisierungsnachricht nach dem Auslesen die Meldegerät-ID und die auf dem RFID-Transponder hinterlegten Daten an die Basisstation übermittelt werden, wo die Verknüpfung zwischen dem RFID-Transponder und dem Meldegerät hinterlegt wird. In weiterer Folge wird in den Aktualisierungsnachrichten lediglich die Meldegerät-ID übertragen, welche somit auf Grund der Verknüpfung eine dem RFID-Transponder eindeutig zugeordnete Identifikation enthält. Die obigen Schritte des Verfahrens können je nach Ausführung in der angegebenen oder einer anderen Reihenfolge, gegebenenfalls auch parallel, ausgeführt werden.

Um das Objekt mit dem RFID-Transponder möglichst lange ohne Zutun der Bedienperson überwachen zu können, ist bei einer bevorzugten Ausführungsform vorgesehen, dass die dem RFID-Transponder eindeutig zugeordnete Identifikation zumindest so lange in Aktualisierungsnachrichten enthalten ist, bis ein weiterer RFID-Transponder durch das mobile Meldegerät ausgelesen wird. Demnach ist nach einem Auslesen in sämtlichen darauffolgenden Aktualisierungsnachrichten die Identifikation enthalten, bis schließlich ein weiterer RFID-Transponder ausgelesen wird, der vom RFID-Transponder, der zuvor ausgelesen wurde, verschieden ist. Alternativ kann die Identifikation auch in Reaktion auf ein Signal gelöscht werden, welches durch Betätigung eines Bedienelements, beispielsweise in Form eines an dem Gehäuse angebrachten Knopfes, erzeugt wird.

Damit die genaue Position des Objekts bestimmt werden kann, ist es günstig, wenn die Position des mobilen Meldegeräts mit einer Positionsbestimmungseinheit, insbesondere einer GNSS-Einheit, des mobilen Meldegeräts bestimmt wird, wobei die Daten zur Position des Meldegeräts in den Aktualisierungsnachrichten an die Basisstation übertragen wird. Insbesondere kann dabei eine GNSS-Einheit verwendet werden. GNSS bedeutet Globales Navigationssatellitensystem und umfasst satellitengestützte Navigationssysteme wie GPS, GLONASS oder Galileo. Mit der GNSS-Einheit kann nicht nur festgestellt werden, ob sich das Meldegerät im Empfangsbereich der Basisstation befindet, der mitunter sehr groß sein kann, sondern es kann sehr genau, gegebenenfalls bis auf wenige Zentimeter, die Position bestimmt werden, an der sich ein Objekt befindet. Aus Gründen der Effizienz erfolgt die Verarbeitung der Daten zur Position vorzugsweise in der Basisstation. Dadurch kann die Datenkommunikation vereinfacht werden. Somit wird die Position des mobilen Meldegeräts und damit des Objekts auf Basis der Positions- bzw. Standortdaten der GNSS-Einheit bevorzugt erst in der Basisstation ermittelt. Die Daten zur Position müssen dabei nicht in jeder einzelnen übertragenen Aktualisierungsnachricht enthalten sein. Dadurch, dass die Position der Basisstation mit hoher Genauigkeit bekannt ist, können Störsignale der Ionosphäre bei der Positionsbestimmung des Meldegeräts kompensiert werden. Alternativ kann die Positionsbestimmung auch mittels Triangulation erfolgen. Zu diesem Zweck werden Nachrichten an umliegende Stationen gesendet, wobei die Position des Meldegeräts unter Bestimmung der Laufzeiten der Nachrichten mittels Triangulation erfolgen kann.

Um neben der Position des Objekts auch feststellen zu können, ob das Objekt noch in Gebrauch ist oder bereits einer weiteren Verwendung zugeführt werden kann, wird das Meldegerät bei einer Ausführungsform über einen Sensoranschluss mit einem Sensor, insbesondere mit einem Temperatur-, Druck- und/oder mit einem Leitfähigkeitssensor, verbunden, wobei vom Sensor erfasste Messwerte in den Aktualisierungsnachrichten an die Basisstation übertragen werden. Beispielsweise kann das mobile Meldegerät mit einem in einem Schalungselement eingebrachten Leitfähigkeitssensor verbunden werden, wodurch festgestellt werden kann, ob die Schalung bereits mit frischem Beton in Kontakt ist. Wird das Meldegerät mit einem Temperatursensor verbunden, kann der Temperaturverlauf des eingegossenen Betons überwacht werden und dadurch der Aushärtegrad bestimmt werden. Somit kann festgelegt werden, ob die Schalung noch weiter benötigt wird oder bereits entfernt werden kann. Auch die Verbindung mit einem Lage-, Gyrooder Beschleunigungssensor kann hergestellt werden, um beispielsweise feststellen zu können, in welcher Raumlage sich das Objekt befindet oder wann ein Objekt das letzte Mal in Bewegung versetzt wurde. Damit kann auch festgestellt werden, ob sich das Objekt noch in Gebrauch befindet. Der Sensoranschluss muss nicht unbedingt durch eine physische Verbindung gebildet sein; der Sensoranschluss kann auch durch eine drahtlose Verbindung, insbesondere eine Funkverbindung, gebildet werden. Weitere Sensoren, wie beispielsweise Druck-, Lage-, Beschleunigungs-, Gyro- und/oder Temperatursensoren können sich aber auch im Meldegerät selbst befinden. Wie die Daten zur Position müssen auch die Messwerte nicht in jeder einzelnen Aktualisierungsnachricht enthalten sein.

Die gestellte Aufgabe wird zudem durch ein mobiles Meldegerät zum Überwachen eines mit einem RFID-Transponder ausgestatteten Objekts gelöst, wobei das mobile Meldegerät aufweist:
- ein Gehäuse zur Anbringung an dem Objekt;
- eine Ausleseeinheit zum Auslesen des RFID-Transponders;
- eine Sendeeinheit zum Übertragen von Aktualisierungsnachrichten an eine Basisstation; und
- eine Verarbeitungseinheit, welche mit der Ausleseeinheit und mit der Sendeeinheit verbunden ist,
wobei die Verarbeitungseinheit dazu eingerichtet ist, die Sendeeinheit zum Übertragen mehrerer Aktualisierungsnachrichten in zeitlichen Abständen von dem mobilen Meldegerät an die Basisstation zu aktivieren, wobei jede Nachricht eine dem RFID-Transponder eindeutig zugeordnete Identifikation enthält.

Das mobile Meldegerät ist somit in der Lage, das oben beschriebene Verfahren auszuführen. Das Gehäuse des mobilen Meldegeräts wird an dem Objekt angebracht. Hierzu können an oder innerhalb des Gehäuse entsprechende, reversibel lösbare Verbindungselemente vorgesehen sein. Es ist aber auch denkbar, dass das Meldegerät in eine Ausnehmung des Objekts gelegt und darin gesichert wird, sodass es nicht herausfallen kann. Auch diese Ausführung ist als Anbringung zu verstehen.Um rauen Bedingungen standzuhalten, ist das Gehäuse vorzugsweise wasser- und/oder staubdicht ausgeführt. Innerhalb des Gehäuses kann ein Energiespeicher, insbesondere ein Akkumulator, vorgesehen sein. Das Gehäuse kann zudem eine im Wesentlichen plane Auflagefläche zur Auflage an dem Objekt aufweisen. Zur Bestimmung von Umgebungsparametern kann zudem vorgesehen sein, dass an oder innerhalb des Gehäuses Sensoren, wie beispielsweise Druck und/oder Temperatursensoren, angebracht sind. Die Verarbeitungseinheit kann durch einen Mikrocontroller oder einen Mikroprozessor gebildet werden, welcher erfindungsgemäß mit der Sendeeinheit und mit der Ausleseeinheit verbunden ist. Die Verarbeitungseinheit ist auch dazu eingerichtet, die Identifikation zur Verfügung zu stellen. Die Sendeeinheit ist bevorzugt eine Funk-Sendeeinheit, insbesondere eine Sendeeinheit für ein Funknetz, besonders bevorzugt eine Sendeeinheit für ein LPWAN ("Low Power Wide Area Network"), wie beispielsweise LoRaWAN ("Long Range Wide Area Network"). Dementsprechend ist auch die Basisstation ausgebildet, die Aktualisierungsnachrichten zu empfangen. In der besonders bevorzugten Ausführungsform sind daher das Meldegerät und die Basisstation Teilnehmer an dem LPWAN. Zur Erläuterung des durch das mobile Meldegerät durchgeführten Verfahrens und der verwendeten Begriffe wird auf die obigen Ausführungen verwiesen.

Um die Position des Objekts exakter bestimmen zu können, ist es günstig, wenn das Meldegerät eine Positionsbestimmungseinheit, insbesondere eine GNSS-Einheit, zur Bestimmung der Position des Meldegeräts aufweist, welche Positionsbestimmungseinheit mit der Verarbeitungseinheit verbunden ist. Die Positionsbestimmungseinheit kann beispielsweise dazu eingerichtet sein, Nachrichten an mehrere umliegende Stationen zu senden, wobei die Position des Meldegeräts unter Bestimmung der Laufzeiten der Nachrichten mittels Triangulation erfolgen kann. Wird die Positionsbestimmungseinheit durch eine GNSS-Einheit gebildet, werden bevorzugt Satelliten-Rohdaten an die Basisstation übermittelt, wo die Bestimmung der Position des Objekts auf Basis der Satelliten-Rohdaten stattfindet.

Um neben der Position des Objekts auch feststellen zu können, ob das Objekt noch in Gebrauch ist oder bereits einer weiteren Verwendung zugeführt werden kann, ist es günstig, wenn das Meldegerät einen Sensoranschluss, insbesondere einen elektrischen Sensoranschluss, zum Anschließen eines außerhalb des Gehäuses befindlichen Sensors, insbesondere eines Temperatur-, Druck- und/oder einem Leitfähigkeitsensors, aufweist. Vorzugsweise ist der Sensoranschluss an dem Gehäuse angeordnet. Der Sensoranschluss kann aber alternativ durch eine drahtlose Verbindung, insbesondere eine Funkverbindung, gebildet werden, wobei in diesem Fall das Modul für die drahtlose Verbindung zu einem Sensor innerhalb des Gehäuses angeordnet ist. Auch der Anschluss von Beschleunigungs-, Lage- oder Gyrosensoren ist möglich, um Lage und Bewegung des Objekts bestimmen zu können. Die Daten des Sensors werden ebenfalls in den Aktualisierungsnachrichten übertragen und können entweder bereits im Meldegerät selbst oder in der Basisstation verarbeitet werden.

Damit das Meldegerät an dem Objekt befestigt werden kann, ist es günstig, wenn ein Verbindungselement, insbesondere zumindest ein Magnet, zur lösbaren Anbringung des Meldegeräts an dem Objekt vorgesehen ist. Das Verbindungselement kann alternativ auch durch Klemmen oder Schrauben gebildet werden. Vorzugsweise wird aber zumindest ein Magnet verwendet, welcher innerhalb des Gehäuses an einer oder benachbart zu einer Gehäuseseite angeordnet ist und somit eine Befestigung des Meldegeräts an einem Objekt ermöglicht, wobei im befestigten Zustand des Meldegeräts die Außenseite der Gehäuseseite an dem Objekt anliegt. Natürlich kann der zumindest eine Magnet aber auch außerhalb des Gehäuses angeordnet sein. Günstig ist es jedenfalls, wenn die Gehäuseseite eine im Wesentlichen plane Auflagefläche bildet.

Um zum einen das Auslesen zu erleichtern und zum anderen ein unbeabsichtigtes Versetzen des Meldegeräts zu vermeiden, ist es vorteilhaft, wenn das Gehäuse ein Aufnahmeelement aufweist, in welches der RFID-Transponder in einem mit dem Meldegerät verbundenen Zustand zumindest teilweise aufgenommen ist. Dadurch kann das Meldegerät und damit die Ausleseeinheit in unmittelbarer Nähe zu dem RFID-Transponder angebracht werden, sodass eine besonders gute Verbindung zwischen dem RFID-Transponder und der Ausleseeinheit hergestellt werden kann. Bei einer solchen Anordnung in unmittelbarer Nähe kann darüber hinaus Energie gespart werden, da die Ausleseeinheit nur eine vergleichsweise geringe Reichweite zum Auslesen aufweisen muss.

Vorzugsweise ist das Aufnahmeelement an die Form des RFID-Transponders angepasst, sodass dieser im Wesentlichen formschlüssig in dem Aufnahmeelement aufnehmbar ist. Dadurch wird die Position des Meldegerätes am Objekt, insbesondere bei Verwendung eines Magneten als Verbindungselementes, gegen ein Verrutschen gesichert.

In einer bevorzugten Ausführungsform ist vorgesehen, dass als Aufnahmeelement eine vorzugsweise kreisrunde Vertiefung des Gehäuses vorgesehen ist. Insbesondere ist die Vertiefung an der im Wesentlichen planen Auflagefläche ausgebildet wird.

Die erfindungsgemäße Aufgabe wird zudem durch ein System der eingangs erwähnten Art gelöst, wobei das System folgendes aufweist:
- zumindest ein mobiles Meldegerät gemäß einer der obigen Ausführungsvarianten, zur Anbringung an einem Objekt; und
- einen RFID-Transponder.

Der RFID-Transponder kann durch Befestigungselemente im Wesentlichen fix, beispielsweise durch Kleben, Schrauben oder Nieten, an dem Objekt angebracht sein. Alternativ kann der RFID-Transponder auch in das Objekt, vorzugsweise benachbart zu einer Oberfläche, integriert sein.

Um die Position des Meldegeräts zu sichern und die Verbindung des Meldegeräts mit dem RFID-Transponder zu verbessern, kann der RFID-Transponder im Wesentlichen passgenau in einem Aufnahmeelement des mobiles Meldegeräts aufgenommen sein. Demnach bildet das Aufnahmeelement des Meldegeräts bei dieser Ausführungsform ein Negativ zu dem RFID-Transponder.

Um das mobile Meldegerät unabhängig von der Ausrichtung des RFID-Transponders am Objekt anbringen zu können, ist es günstig, wenn das Aufnahmeelement und der RFID-Transponder im Querschnitt jeweils im Wesentlichen kreisförmig sind. Somit gibt es keine bestimmte Vorzugsrichtung, wie das Meldegerät auf den RFID-Transponder aufgesetzt werden muss.

Zudem kann eine Basisstation mit einer Empfangseinheit zum Empfangen von Aktualisierungsnachrichten des Meldegeräts vorgesehen sein. Die Empfangseinheit ist insbesondere eine Funk-EmpfangsEinheit, bevorzugt eine Empfangseinheit für ein Funknetz, besonders bevorzugt eine Empfangseinheit in einem LPWAN ("Low Power Wide Are Network"), wie beispielsweise LoRaWAN ("Long Range Wide Area Network").

Darüber hinaus kann eine Verarbeitungseinheit der Basisstation dazu eingerichtet sein, auf Basis der Aktualisierungsnachrichten von dem mobilen Meldegerät festzustellen, ob sich ein Objekt in Empfangsreichweite der Basisstation befindet.

Die Erfindung wird nachstehend an Hand von bevorzugten Ausführungsformen näher erläutert.
Fig. 1 zeigt ein erfindungsgemäße mobiles Meldegerät in einer Schrägansicht.
Fig. 2A und Fig. 2B zeigen ein erfindungsgemäßes mobiles Meldegerät in einer Seitenansicht mit Blick auf eine Stirnseite.
Fig. 3 zeigt ein erfindungsgemäßes mobiles Meldegerät in einer Schrägansicht mit teilweise geöffnetem Gehäuse.

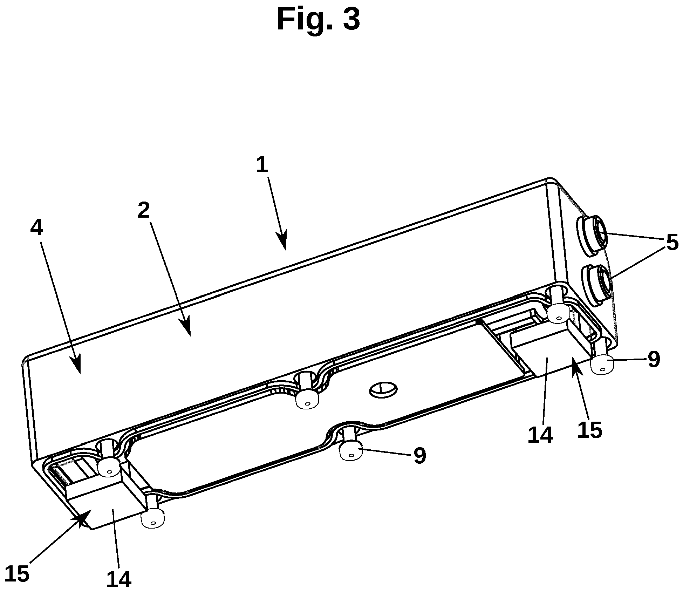

Fig. 3 zeigt ein erfindungsgemäßes mobiles Meldegerät in einer Draufsicht mit teilweise geöffnetem Gehäuse.

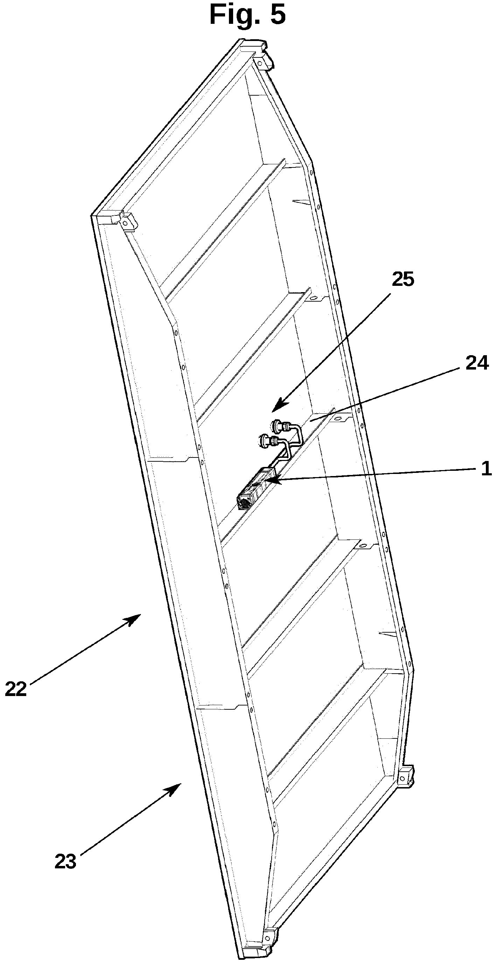

Fig. 5 zeigt ein an einem Objekt angebrachtes erfindungsgemäßes mobiles Meldegerät.

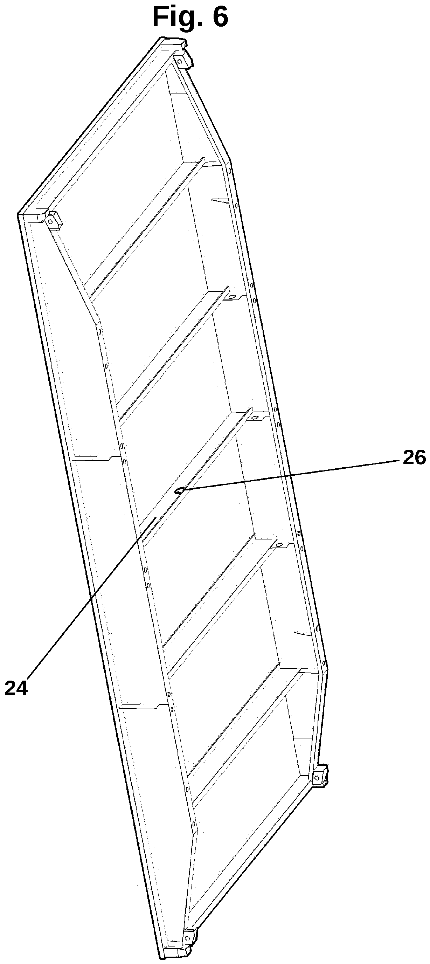

Fig. 6 zeigt ein Objekt mit einem RFID-Transponder.

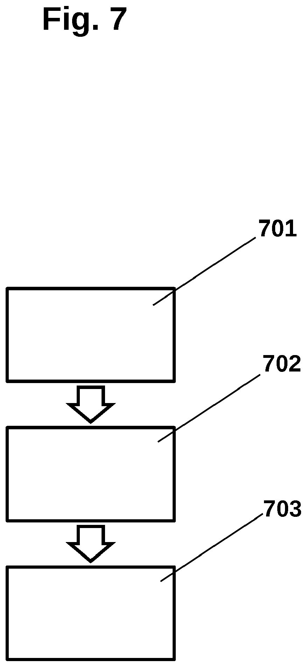

Fig. 7 zeigt einen typischen Verfahrensablauf vom Anbringen eines mobilen Meldegeräts bis zum Senden an eine Basisstation.

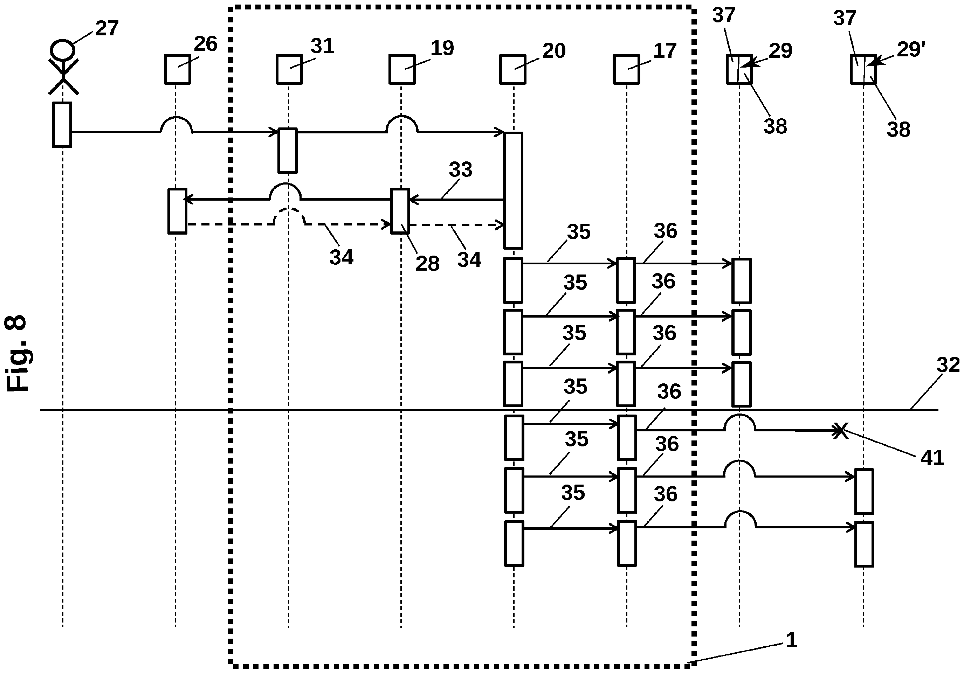

Fig. 8 zeigt ein Sequenzdiagramm, welches Teil des Verfahrensablaufes gem. Fig. 7 ist.

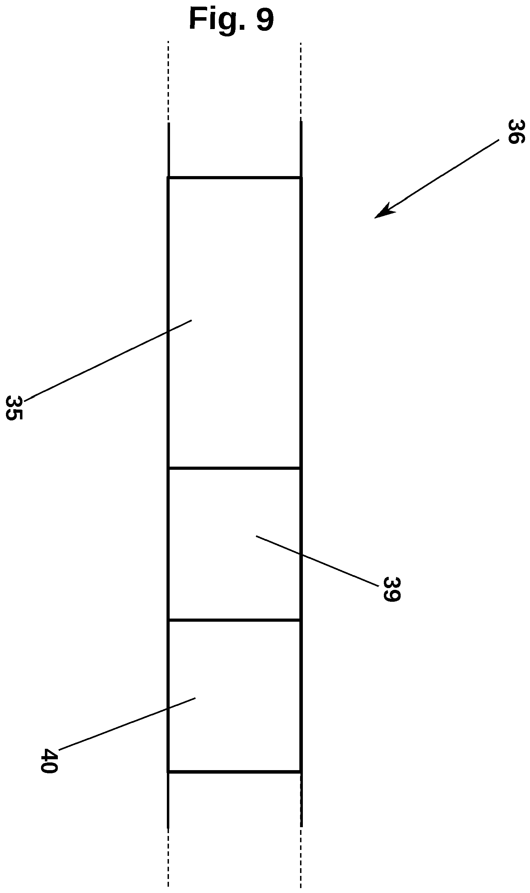

Fig. 9 zeigt einen Ausschnitt einer Aktualisierungsnachricht.

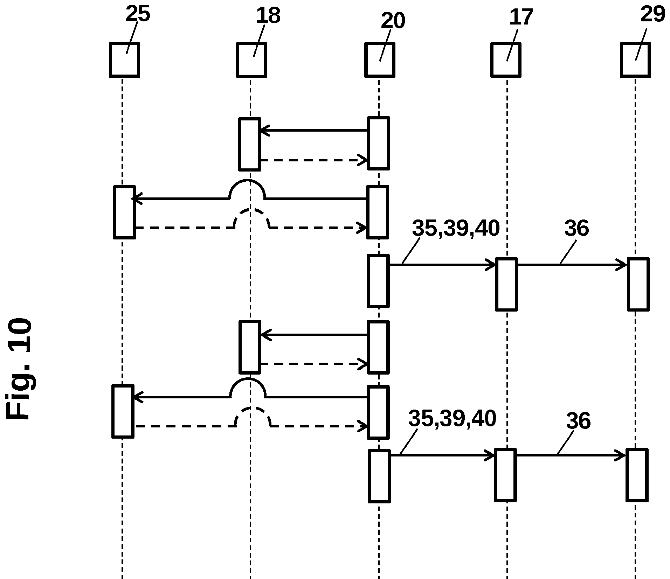

Fig. 10 zeigt einen weiteren Verfahrensablauf des mobilen Meldegeräts.

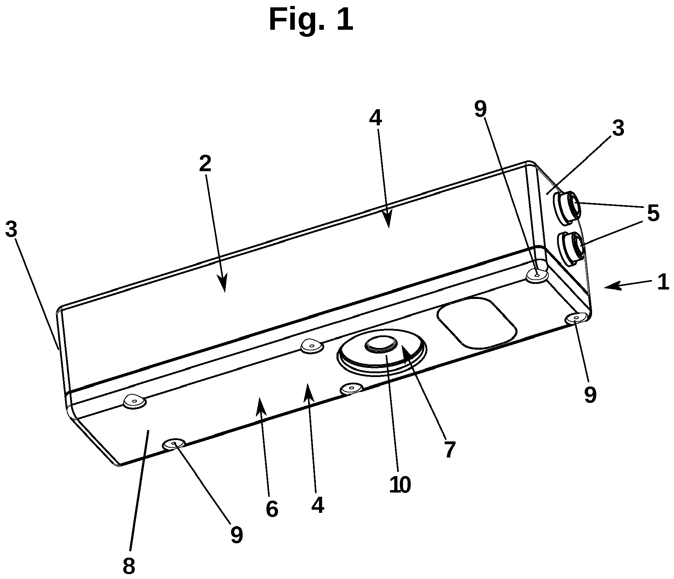

Fig. 1 zeigt ein mobiles Meldegerät 1 zum Überwachen eines Objekts 22, wie beispielsweise ein Schalungselement, ein Container oder ein Baugerät (vgl. Fig. 5). Das mobile Meldegerät 1 ist als von einer einzelnen Person zu tragendes Handgerät ausgeführt und weist ein Gehäuse 2 mit zwei gegenüberliegenden Stirnseiten 3 und vier angrenzenden Seitenflächen 4 auf, wobei an einer Stirnseite 3 zwei Sensoranschlüsse 5 angeordnet sind. An einer der Seitenflächen 4, welche im Folgenden auch als Unterseite 6 des Gehäuses bezeichnet wird, bildet das Gehäuse 2 eine bis auf ein Aufnahmeelement 7 im Wesentlichen plane, d.h. wölbungsfreie Auflagefläche 8 zur Auflage an dem Objekt 22 aus. An der Unterseite 6 des Gehäuses befinden sich weiters noch sechs Schrauben 9, die ein Öffnen des Gehäuses 2 ermöglichen. An der Unterseite können auch Knöpfe (nicht gezeigt) angeordnet sein.

Das Aufnahmeelement 7 ist zur Aufnahme eines RFID-Transponders 26 (vgl. Fig. 6) ausgeformt und wird durch eine in das Innere des Gehäuses 2 ragende Vertiefung 10 an der Unterseite 6 gebildet. Die Vertiefung 10 ist in der gezeigten Ausführungsform kreisrund ausgebildet, kann aber auch rechteckig, insbesondere quadratisch, oder vieleckig sein. Wenn der RFID-Transponder 26 im Fall der kreisrunden Vertiefung 10 ebenfalls kreisrund geformt ist, kann das Meldegerät 1 ohne Beachtung einer Vorzugsrichtung, wie sie beispielsweise bei eckigen RFID-Transpondern 26 und Vertiefungen 10 gegeben wäre, derart über den RFID-Transponder platziert werden, dass dieser in die Vertiefung 10 aufgenommen ist. Vorzugsweise ist die Form der Vertiefung 10 an die Form des RFID-Transponders angepasst, sodass dieser im Wesentlichen passgenau und vorzugsweise auch gänzlich in die Vertiefung 10 aufgenommen ist.

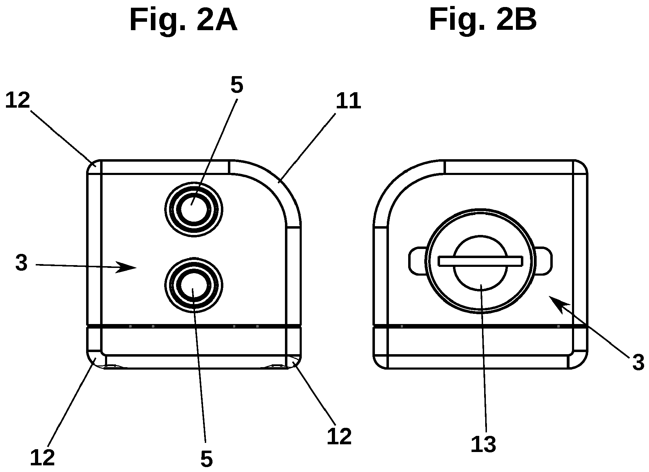

Fig. 2A zeigt die Stirnseite 3 des Meldegeräts 1 mit den beiden Sensoranschlüssen 5. In dieser Ansicht ist auch erkennbar, dass das Gehäuse 2 nicht symmetrisch geformt ist, sondern dass zwei aneinander angrenzende Seitenflächen 4 über eine Kante 11 mit einem größeren Kurvenradius im Vergleich zu den übrigen Kanten 12 miteinander verbunden sind.

Fig. 2B zeigt die Stirnseite 3, welche der Stirnfläche 3 mit den Sensoranschlüssen 5 gegenüberliegt. Diese Stirnfläche 3 weist eine durch einen Deckel 13 verschließbare Gehäuseöffnung, beispielsweise für einen Batteriewechsel, auf.

Fig. 3 zeigt das mobile Meldegerät 1 mit teils geöffneten Gehäuse 2, wobei die Unterseite 6 entfernt wurde. Im Gehäuse 2, benachbart zu der Unterseite 6 und auch benachbart zu den Stirnseiten 3 weist das Meldegerät 1 zwei durch Magnete 14 gebildete Verbindungselemente 15 zur reversibel lösbaren Befestigung an dem Objekt 22 auf. Die Magnete 14 haben bevorzugt eine Haltekraft von jeweils über 2 kg, besonders bevorzugt von über 5 kg.

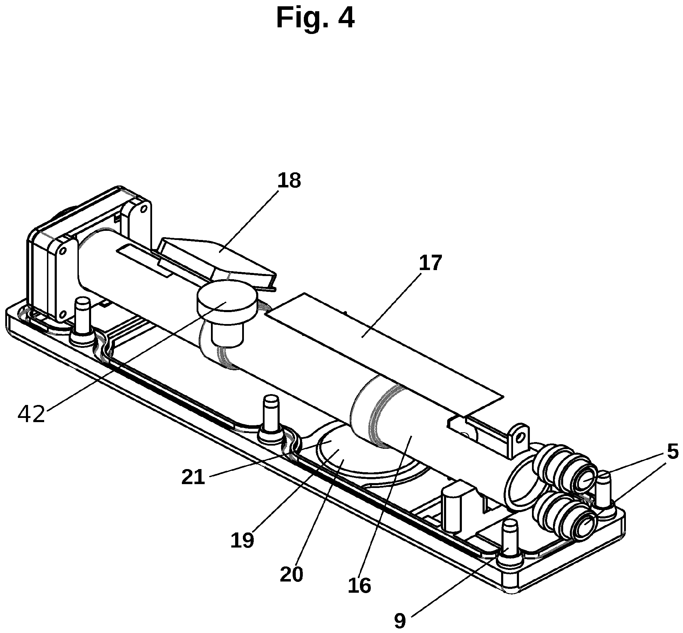

Fig. 4 zeigt das mobile Meldegerät 1 mit teils geöffneten Gehäuse 2 in einer Draufsicht, wobei die Stirnseiten 3 sowie die Seitenflächen 4, bis auf die Unterseite 6, entfernt wurden. Es ist erkennbar, dass das Meldegerät 1 eine Energieversorgung 16, wie beispielsweise Batterien oder einen Akkumulator, und eine Sendeeinheit 17 zum Übertragen von Aktualisierungsnachrichten an eine Basisstation 29 (vgl. Fig. 7) aufweist. Die Sendeeinheit 17 kann auch gleichzeitig als Empfangseinheit ausgebildet sein, um einen bidirektionalen Datenaustausch mit der Basisstation 29 zu ermöglichen. Vorzugsweise ist die Sendeeinheit 17 aus Gründen der Energieeffizienz für das Senden von Daten in einem LPWAN ("Low Power Wide Are Network"), wie beispielsweise LoRaWAN ("Long Range Wide Area Network"), ausgebildet. Weiters weist das Meldegerät 1 eine GNSS-Einheit 18, eine Ausleseeinheit 19 zum Auslesen des RFID-Transponders 26, eine Verarbeitungseinheit 20 zum Verarbeiten von Daten und einen Speicher 21 auf. Vorzugsweise sind sämtliche Einheiten und Speicher des Meldegeräts 1 mit der Verarbeitungseinheit 20 verbunden. An Stelle der GNSS-Einheit 18 kann auch eine andere Positionsbestimmungseinheit, beispielsweise eine Einheit zur Bestimmung der Position mittels Triangulation, vorgesehen sein.

In Fig. 4 ist zudem eine Druckausgleichsvorrichtung 42 ersichtlich, welche das Gehäuse 2 im geschlossenen Zustand zumindest teilweise durchdringt und einen Druckausgleich zwischen dem Gehäuseinneren und der Umgebung ermöglicht.

Fig. 5 zeigt das Objekt 22, welches in der gezeigten Ausführungsform durch ein Schalungselement 23 gebildet wird. Am Schalungselement 23 ist das mobile Meldegerät 1 vorübergehend angebracht. In Fig. 5 ist erkennbar, dass das Meldegerät 1 mit Hilfe der Magnete 14 an einer Querstrebe 24 haftet und über einen der beiden Sensoranschlüsse 5 mit einem Sensor 25 des Schalungselements 23 verbunden ist. Der Sensor 25 kann beispielsweise ein Leitfähigkeits-, Druck-, Temepratur-, Beschleunigungs-, Gyro- oder Lagesensor sein. An Stelle der (physischen) Sensoranschlüsse 5 können Sensoren bei entsprechender Ausgestaltung auch über eine drahtlose Verbindung, insbesondere eine Funkverbindung, mit dem Meldegerät 1 verbunden sein. Zu diesem Zweck kann das Meldegerät 1 vorzugsweise innerhalb des Gehäuses 2 ein entsprechendes Modul für die drahtlose Verbindung zu einem Sensor 25 aufweisen.

Fig. 6 zeigt das Objekt 22 mit einem kreisrunden RFID-Transponder 26, welcher an der Querstrebe 24 befestigt ist. Vorteilhafterweise kann das Meldegerät 1 derart an dem Objekt 22 angebracht werden, dass der RFID-Transponder in dem Aufnahmeelement 7 gänzlich und formschlüssig aufgenommen wird, so wie dies in Fig. 5 der Fall ist. Der RFID-Transponder 26 kann auch rechteckig oder quadratisch ausgeführt sein.

Fig. 7 zeigt einen beispielhaften Verfahrensablauf vom Anbringen des Meldegeräts 1 durch eine Bedienperson 27 bis zum Übertragen von Aktualisierungsnachrichten 36 an eine Basisstation 29 und eine weitere Basisstation 29'. Der Verfahrensablauf stellt allerdings nur ein Beispiel dar. Bevorzugt werden die Schritte des Verfahrens in der angegebenen Reihenfolge ausgeführt. Einzelne Schritte des Verfahrensablaufs in Fig. 7 sind in Fig. 8 detailliert dargestellt.

In einem Schritt 701 wird das Meldegerät 1 an dem Objekt 22 befestigt, sodass der RFID-Transponder 26 in dem Aufnahmeelement 7 aufgenommen ist und eine Kommunikation zwischen dem RFID-Transponder 26 und dem Auslesegerät 19 erfolgen kann (vgl. Fig. 5). Nach dem Anbringen in Schritt 701 wird das Meldegerät 1 bzw. die Ausleseeinheit 19 zu Beginn des Schritts 702 durch die Bedienperson 27 zum Auslesen 30 aktiviert. Dies kann beispielsweise durch Drücken eines am Gehäuse 2 des Meldegeräts 1 befestigten Knopfes 31 vorgenommen werden. Es ist aber auch möglich, zuerst den Knopf 31 zu drücken und erst danach das Meldegerät 1 an dem Objekt 22 zu befestigen. Das Verfahren wird dadurch nicht eingeschränkt, da das Meldegerät 1 bevorzugt über eine vorgegebene Zeitdauer zum Auslesen aktiviert ist. Diese alternative Reihenfolge ist insbesondere dann günstig, wenn der Knopf 31 an der Unterseite 6 des Gehäuses 2 angeordnet ist. Der weitere Verfahrensablauf in Schritt 702, beginnend mit der Aktivierung zum Auslesen durch Drücken des Knopfes 31, ist bis zu einer Begrenzungslinie 32 in Fig. 8 in einem Sequenzdiagramm dargestellt. Durch Drücken des Knopfes 31, welcher mit der Verarbeitungseinheit 20 verbunden ist, aktiviert die Verarbeitungseinheit 20 die Ausleseeinheit 19 zum Auslesen 28 des RFID-Transponders 26, verdeutlicht durch die Linie 33. "Auslesen" bedeutet in diesem Zusammenhang den Aufbau des Kommunikationskanals, das etwaige Versorgen des RFID-Transponders 26 mit Energie, das Übertragen der Daten vom RFID-Transponder 26 an das Meldegerät 1 (und bei bidirektionaler Übertragung auch zurück) und den Abbauen des Kommunikationskanals. Aus Gründen der Energieeffizienz wird das Auslesen 28 bevorzugt nach einer begrenzten Zeitdauer von unter 1 Minute, besonders bevorzugt von im Wesentlichen 30 Sekunden, beendet. Der RFID-Transponder 26 ist vorzugsweise ein passiver NFC-Transponder und wird während des Auslesens 28 von der Ausleseeinheit 19 durch das elektromagnetische Feld mit Energie versorgt. Durch das Auslesen 28 werden die auf dem RFID-Transponder 26 gespeicherten Daten, wie beispielsweise eine Artikelnummer, durch die Ausleseeinheit 19 ausgelesen und an die Verarbeitungseinheit 20 weitergegeben, wie durch die Linien 34 verdeutlicht. Die Verarbeitungseinheit 20 kann auf Basis der durch das Auslesen 28 erhaltenen Daten eine dem RFID-Transponder 26 eindeutig zugeordnete Identifikation 35 erzeugen. Diese kann auf verschiedenste Arten generiert werden. Beispielsweise kann die Identifikation 35 eine auf dem RFID-Transponder 26 gespeicherte Artikelnummer sein, welche direkt herangezogen wird. In diesem Fall ist keine weitere Verarbeitung notwendig, die Artikelnummer kann von der Verarbeitungseinheit 20 direkt als Identifikation 35 herangezogen werden. Es ist aber auch möglich, dass das Meldegerät 1 eine Meldegerät-ID aufweist und die Meldegerät-ID dem RFID-Transponder 26 durch eine Verknüpfung zugeordnet wird. Diese Verknüpfung kann beispielsweise in der Basisstation 29, in der weiteren Basisstation 29' oder auf einem Server gespeichert werden. Durch die Verknüpfung ist bekannt, welches Meldegerät 1 mit welchem RFID-Transponder 26 verknüpft ist, wodurch die Meldegeräte-ID auch eine Identifizierung des RFID-Transponders 26 und damit des Objekts 22 erlaubt. In diesem Sinne kann daher auch eine Meldegerät-ID eine Identifikation 35 darstellen.

Die Verarbeitungseinheit 20 stellt die Identifikation 35, in dem Fall eine Artikelnummer, der Sendeeinheit 17 des Meldegeräts 1 zur Verfügung und regt diese in zeitlichen Abständen, beispielsweise alle 2 Minuten oder, wenn die Sendeeinheit 17 des Meldegeräts 1 auch als Empfangseinheit ausgebildet ist, durch Abfrage durch die Basisstation 29, an, die Identifikation 35 in Aktualisierungsnachrichten 36 an die Basisstation 29 zu übertragen. Dies ist bis zur Begrenzungslinie 32 dargestellt. Die Basisstation 29 kann sich beispielsweise in einem Lager befinden. Die Basisstation 29 weist zweckmäßigerweise eine Empfangseinheit 37 auf, welche zum Empfang der Aktualisierungsnachrichten 36 eingerichtet ist. Die Empfangseinheit 37 kann auch gleichzeitig als Sendeeinheit ausgebildet sein. Vorzugsweise ist die Empfangseinheit 37 aus Gründen der Energieeffizienz ebenfalls für das Empfangen von Daten in einem LPWAN ("Low Power Wide Are Network"), wie beispielsweise LoRaWAN ("Long Range Wide Area Network"), ausgebildet. Zudem kann die Basisstation 29 ebenfalls über eine Verarbeitungseinheit 38 verfügen, welche dazu eingerichtet sein kann, auf Basis der Aktualisierungsnachrichten 36 von dem mobilen Meldegerät 1 festzustellen, ob sich ein Objekt 22 in Empfangsreichweite der Basisstation 29 befindet. Die Basisstation 29 kann auch mit einem Server verbunden sein.

In Schritt 703 findet in Fig. 7 nach einer gewissen Zeit ein Ortswechsel des Objekts 22 statt. Dabei wird das Objekt 22 mitsamt dem mobilen Meldegerät 1 durch das Bedienpersonal 27 an einen anderen Ort, beispielsweise eine Baustelle, gebracht. An der Baustelle befindet sich die weitere Basisstation 29'. Durch den Ortswechsel hat das Meldegerät 1 den Empfangsbereich der Basisstation 29 verlassen und ist in dem Empfangsbereich der weiteren Basisstation 29' eingetreten. Das Aussenden der Aktualisierungsnachrichten 36 während des Ortswechsels und nach dem Ortswechsel wird in dem Sequenzdiagramm in Fig. 8 unterhalb der Begrenzungslinie 32 dargestellt. Durch den Ortswechsel empfängt die Basisstation 29', welche im Wesentlichen gleich wie die Basisstation 29 ausgebildet ist, die Aktualisierungsnachrichten 36 mit der Identifikation 35. Dadurch kann der Ortswechsel des Objekts 22 festgestellt werden. Während des Ortswechsel kann es allerdings vorkommen, dass sich das Meldegerät 1 weder im Empfangsbereich der Basisstation 29 noch im Empfangsbereich der weiteren Basisstation 29' befindet und daher Aktualisierungsnachrichten 26 aussendet, die von keiner der beiden Basisstationen 29, 29' empfangen werden. Dies wird durch das Kreuz mit der Bezugsziffer 41 zum Ausdruck gebracht.

Die Aktualisierungsnachrichten 36 können neben der Identifikation 35 noch weitere Daten enthalten. Dies wird durch Fig. 9 verdeutlicht, worin ein Ausschnitt einer Aktualisierungsnachricht 33 gezeigt ist. Die dargestellte Aktualisierungsnachricht 36 enthält neben der Identifikation 35 Daten 39 zur Position des Meldegeräts 1, welche von der GNSS-Einheit 18 stammen. Bei diesen Daten handelt es sich insbesondere um Satelliten-Rohdaten, welche erst durch die Basisstation 29 zu einer tatsächlichen Position weiterverarbeitet werden. Weiters kann die Aktualisierungsnachricht 36 noch Messwerte 40 von Sensoren 25 enthalten. Zweckmäßigerweise ist dazu die GNSS-Einheit 18 und der Sensoranschluss mit 5 mit der Verarbeitungseinheit 20 verbunden, wodurch die Daten 39 zur Position und die Messwerte 40 der Sendeeinheit 17 zur Verfügung gestellt werden können. Die Aktualisierungsnachricht 36 kann daneben auch noch weitere Daten, wie beispielsweise eine Meldegerät-ID oder eine Artikelnummer, enthalten, was durch die punktierten Linien angedeutet ist. Es ist auch möglich, Messwerte 40 und Daten 39 zur Position in getrennten Aktualisierungsnachrichten 33 zu versenden. Die Daten 39 zur Position oder die Messwerte 40 können auch auf mehrere Aktualisierungsnachrichten 36 aufgeteilt werden.

Fig. 10 zeigt ein weiteres Sequendiagramm für den Fall, dass das mobile Meldegerät 1 über eine GNSS-Einheit 18 und über einen Sensoranschluss 5 verfügt, an den ein Sensor 25 angeschlossen ist. Das Sequenzdiagramm zeigt einen Verfahrensablauf, bei dem das Meldegerät 1 bereits an einem Objekt 22 angebracht wurde und der RFID-Transponder 26 bereits ausgelesen wurde. Diese Schritte sind daher nicht dargestellt, entsprechen aber im Wesentlichen dem Ablauf in Fig. 7 mit dem Unterschied, dass die Bedienperson 27 noch die Sensoren 25 mit dem mobilen Meldegerät 1 verbinden muss.

Die Verarbeitungseinheit 20 aktiviert zunächst die GNSS-Einheit 18, welche Daten 39 zur Position bereitstellt. Anschließend fragt die Verarbeitungseinheit 20 den Sensor 25 ab, welcher Messwerte 40 zur Verfügung stellt. Die Daten 39 zur Position und die Messwerte 40 werden anschließend der Sendeeinheit 32 zur Verfügung gestellt, welche die Daten in den Aktualisierungsnachrichten 36 gemeinsam mit der Identifikation 35 an die Basisstation übermittelt. Die Übertragung der Messwerte 40 und der Daten 39 zur Position kann auch getrennt erfolgen. Die Daten 39 zur Position können vor der Übertragung von der Verarbeitungseinheit 20 ausgewertet werden oder werden bevorzugt als Rohdaten in den Aktualisierungsnachrichten 36 an die Basisstation 29 übermittelt.

Das Sequenzdiagramm von Fig. 10 zeigt lediglich einen beispielhaften Verfahrensablauf. Es ist auch denkbar, den Sensor 5 und/oder die GNSS-Einheit 18 in unregelmäßigen Abständen oder nicht stets vor dem Übertragen jeder Aktualisierungsnachricht 36 abzufragen.

## Patentansprüche

1. Verfahren zum Überwachen eines mit einem RFID-Transponder (26) ausgestatteten Objekts (22), wobei das Verfahren umfasst:
- Anbringen eines mobilen Meldegeräts (1) an dem Objekt (22) in Reichweite des RFID-Transponders (26);
- Auslesen des RFID-Transponders (26) mit dem mobilen Meldegerät (1) ;
- Übertragen mehrerer Aktualisierungsnachrichten (36) in zeitlichen Abständen von dem mobilen Meldegerät (1) an eine Basisstation (29), wobei jede Nachricht (36) eine dem RFID-Transponder (26) eindeutig zugeordnete Identifikation (35) enthält.

2. Verfahren nach Anspruch 1, **dadurch gekennzeichnet, dass** die dem RFID-Transponder (26) eindeutig zugeordnete Identifikation (35) zumindest so lange in Aktualisierungsnachrichten (36) enthalten ist, bis ein weiterer RFID-Transponder (26) durch das mobile Meldegerät (1) ausgelesen wird.

3. Verfahren nach einem der Ansprüche 1 bis 2, **dadurch gekennzeichnet, dass** die Position des mobilen Meldegeräts (1) mit einer Positionsbestimmungseinheit, insbesondere einer GNSS-Einheit (18), des mobilen Meldegeräts (1) bestimmt wird, wobei die Daten (39) zur Position des Meldegeräts (1) in den Aktualisierungsnachrichten (36) an die Basisstation (29) übertragen wird.

4. Verfahren nach einem der Ansprüche 1 bis 3, **dadurch gekennzeichnet, dass** das Meldegerät (1) über einen Sensoranschluss (5) mit einem Sensor (25), insbesondere mit einem Temperatur-, Druck- und/oder mit einem Leitfähigkeitssensor, verbunden wird, wobei vom Sensor (25) erfasste Messwerte (40) in den Aktualisierungsnachrichten (36) an die Basisstation (29) übertragen werden.

5. Mobiles Meldegerät (1) zum Überwachen eines mit einem RFID-Transponder ausgestatteten Objekts (22), aufweisend:
- ein Gehäuse (2) zur Anbringung an einem Objekt (22);
- eine Ausleseeinheit (19) zum Auslesen des RFID-Transponders (26) ;
- eine Sendeeinheit (17) zum Übertragen von Aktualisierungsnachrichten (36) an eine Basisstation (29); und
- eine Verarbeitungseinheit (20), welche mit der Ausleseeinheit (19) und mit der Sendeeinheit (17) verbunden ist,
wobei die Verarbeitungseinheit (20) dazu eingerichtet ist, die Sendeeinheit (17) zum Übertragen mehrerer Aktualisierungsnachrichten (36) in zeitlichen Abständen von dem mobilen Meldegerät (1) an die Basisstation (29) zu aktivieren, wobei jede Nachricht (36) eine dem RFID-Transponder (26) eindeutig zugeordnete Identifikation (35) enthält.

6. Mobiles Meldegerät (1) nach Anspruch 5, **dadurch gekennzeichnet, dass** das Meldegerät (1) eine Positionsbestimmungseinheit, insbesondere eine GNSS-Einheit (18), zur Bestimmung der Position des Meldegeräts (1) aufweist, welche Positionsbestimmungseinheit mit der Verarbeitungseinheit (20) verbunden ist.

7. Mobiles Meldegerät (1) nach einem der Ansprüche 5 oder 6, dass das Meldegerät (1) einen Sensoranschluss (5), insbesondere einen elektrischen Sensoranschluss, zum Anschließen eines außerhalb des Gehäuses (2) befindlichen Sensors (25), insbesondere eines Temperatur-, Druck- und/oder einem Leitfähigkeitsensors, aufweist.

8. Mobiles Meldegerät (1) nach einem der Ansprüche 5 bis 7, **dadurch gekennzeichnet, dass** ein Verbindungselement (15), insbesondere zumindest ein Magnet (14), zur lösbaren Anbringung des Meldegeräts (1) an dem Objekt (22) vorgesehen ist.

9. Mobiles Meldegerät (1) nach einem der Ansprüche 5 bis 8, **dadurch gekennzeichnet, dass** das Gehäuse (2) ein Aufnahmeelement (7) aufweist, in welches der RFID-Transponder (26) in einem mit dem Meldegerät (1) verbundenen Zustand zumindest teilweise aufgenommen ist.

10. Mobiles Meldegerät (1) nach Anspruch 9, **dadurch gekennzeichnet, dass** als Aufnahmeelement (7) eine vorzugsweise kreisrunde Vertiefung (10) des Gehäuses (2) vorgesehen ist.

11. System zum Überwachen eines mit einem RFID-Transponder (26) ausgestatteten Objekts (22), aufweisend:
- zumindest ein mobiles Meldegerät (1) gemäß einem der Ansprüche 5 bis 10, zur Anbringung an dem Objekt (22); und
- einen RFID-Transponder (26).

12. System nach Anspruch 11, **dadurch gekennzeichnet, dass** der RFID-Transponder (26) im Wesentlichen passgenau in einem Aufnahmeelement (7) des mobiles Meldegeräts (1) aufgenommen ist.

13. System nach einem der Ansprüche 10 bis 12, **dadurch gekennzeichnet, dass** das Aufnahmeelement (7) und der RFID-Transponder (26) im Querschnitt jeweils im Wesentlichen kreisförmig sind.

14. System nach einem der Ansprüche 10 bis 13, **gekennzeichnet durch**
- eine Basisstation (29) mit einer Empfangseinheit (37) zum Empfangen von Aktualisierungsnachrichten (36) des Meldegeräts.

15. System nach Anspruch 14, **dadurch gekennzeichnet, dass** eine Verarbeitungseinheit (38) der Basisstation (29) dazu eingerichtet ist, auf Basis der Aktualisierungsnachrichten (36) von dem mobilen Meldegerät (1) festzustellen, ob sich ein Objekt (22) in Empfangsreichweite der Basisstation (29) befindet.
